(19) Europäisches Patentamt
European Patent Office
Office européen des brevets

(11) EP 4 628 517 A1

(12) **EUROPEAN PATENT APPLICATION**
published in accordance with Art. 153(4) EPC

(43) Date of publication:
**08.10.2025 Bulletin 2025/41**

(21) Application number: **23897512.2**

(22) Date of filing: **16.11.2023**

(51) International Patent Classification (IPC):
***C08F 290/06*** *(2006.01)* ***C08F 290/14*** *(2006.01)*

(52) Cooperative Patent Classification (CPC):
**C08F 290/06; C08F 290/14**

(86) International application number:
**PCT/JP2023/041194**

(87) International publication number:
**WO 2024/116861 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 JP 2022190124**
**31.08.2023 JP 2023140958**

(71) Applicant: **DIC Corporation**
**Tokyo 174-8520 (JP)**

(72) Inventors:
- **MATSUOKA Ryuichi**
  **Sakura-shi, Chiba 285-8668 (JP)**
- **KANNARI Hiroyoshi**
  **Sakura-shi, Chiba 285-8668 (JP)**
- **ENGEL Michael**
  **Sakura-shi, Chiba 285-8668 (JP)**
- **YAMAGUCHI Junji**
  **Sakura-shi, Chiba 285-8668 (JP)**
- **ARAI Hisayoshi**
  **Sakura-shi, Chiba 285-8668 (JP)**

(74) Representative: **Kraus & Lederer PartGmbB**
**Thomas-Wimmer-Ring 15**
**80539 München (DE)**

# (54) CURABLE RESIN, CURABLE RESIN COMPOSITION, AND CURED ARTICLE

(57) An object of the present invention is to provide a material that has small absorption (low light absorption loss) in the near-infrared region used in optical communication, has excellent heat resistance, and, in addition, can produce a cured article having excellent productivity (UV curability) and also to provide an optical waveguide and an optical adhesive made from the material. Specifically, provided is a curable resin composition containing components (A) to (C) as essential components: (A) a polysiloxane resin having one or more reactive groups selected from the group consisting of a (meth)acryloyl group and a styryl group; (B) a (meth)acrylic acid derivative having a structure represented by General Formula (1); and (C) a radical polymerization initiator.

EP 4 628 517 A1

## Description

### Technical Field

The present invention relates to a polymerizable composition (hereinafter may be abbreviated as a "resin") useful as optical waveguides, optical adhesives, transparent sealants, or related components thereof that can be used in optical applications such as optical communication applications and optical integrated circuit applications and a cured article produced from the resin.

### Background Art

In recent years, higher speed and larger capacity for communication and signal transmission have been increasingly demanded. Signal transmission by light instead of electricity is becoming increasingly important in intra-equipment wiring. Such short-distance optical communication technology is called optical interconnect, and as components of this technology, opto-electric hybrid board are being actively developed, in which part of copper electric wiring on printed wiring boards is replaced with optical wiring using optical fibers or optical waveguides.

The required properties of materials used in optical waveguides include low absorption in the near-infrared region used in optical communication and excellent productivity. Conventionally, quartz-based materials have been commonly used as materials for optical waveguides, but in recent years, optical waveguides containing polymer materials, which are low in cost and easily processed, have been actively studied.

For example, a fluorinated polyimide that can be used as an optical material for optical waveguides has been reported (PTL 1). However, the fluorinated polyimide-based material contains few CH groups in their molecules and have low absorption in the near-infrared region, but they require baking at high temperatures, which causes a cracking problem due to stress caused by the difference in coefficient of thermal expansion between a substrate and a film, and require reactive ion etching to perform patterning, which causes a problem of poor productivity caused by an increased number of processes.

Organic/inorganic hybrid materials having an organic reactive group and a siloxane skeleton have been reported as materials that can be patterned by photolithography and have no byproducts (PTL 2). However, the absorption in the near-infrared region is not sufficiently small, and further improvement is demanded.

Furthermore, polymer materials for optical waveguides are exposed to high-temperature solder reflow during electric circuit formation, and thus materials having excellent heat resistance are required. Recently in particular, lead-free solders, which have high melting points, have been used from the viewpoint of environmental issues, and thus polymer materials for optical waveguides with higher heat resistance have been increasingly demanded.

Light-receiving/emitting elements that transmit and receive light via optical waveguides of opto-electric hybrid board are sealed with a transparent optical adhesive to improve the reliability of the elements. For example, a light-receiving/emitting element such as a surface-emitting laser element (VCSEL) is connected to an optical waveguide on a substrate using the optical adhesive and is then soldered by reflow to connect electric wiring and the light-receiving/emitting element to each other and to fix the element. Thus, such an optical adhesive is also required to have the same performance as materials used for optical waveguides.

To solve such a problem, for example, a resin composition containing a liquid aliphatic epoxy compound and a specific aromatic epoxy compound (PTL 3) and a curable resin composition containing a (meth)acrylate having an alicyclic hydrocarbon group (PTL 4) have been developed. However, the absorption in the near-infrared region is not sufficiently small, and further improvement is demanded.

### Citation List

### Patent Literature

PTL 1: Japanese Unexamined Patent Application Publication No. H05-01148
PTL 2: U.S. Patent No. 6,984,483
PTL 3: Japanese Unexamined Patent Application Publication No. 2020-184091
PTL 4: Japanese Unexamined Patent Application Publication No. H11-61081

### Summary of Invention

Technical Problem

An object of the present invention is to provide a material that has small absorption (low light absorption loss) in the near-infrared region used in optical communication, has excellent heat resistance, and, in addition, can produce a cured article having excellent productivity (UV curability) and also to provide an optical waveguide and an optical adhesive made from the material. Solution to Problem

The inventors of the present invention have conducted intensive studies in order to achieve the above object. Consequently, it has been found that a curable resin composition containing a specific (meth)acrylic acid derivative has low light absorption loss, high heat resistance, and excellent UV curability to complete the present invention.

Specifically, the present invention is as follows:

(1) A curable resin composition containing components (A) to (C) below as essential components:

(A) a polysiloxane resin having one or more reactive groups selected from the group consisting of a (meth)acryloyl group and a styryl group;

(B) a (meth)acrylic acid derivative having a structure represented by General Formula (1) below:

[Chemical Formula 1]

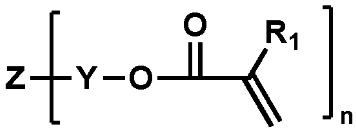

(1)

in General Formula (1) above, $R_1$ is a hydrogen atom or a methyl group; Y is any one of a single bond, a methylene group, and an oxyethylene group; Z is any one of General Formulae (1-1) to (1-8) below; n indicates 1 to 6; and when n is 2 to 6, a plurality of $R_1$ and Y may be the same or different:

[Chemical Formula 2]

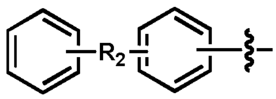 (1-1) 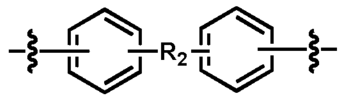 (1-4)

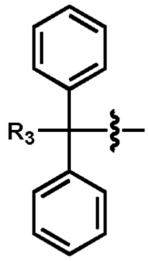 (1-2) 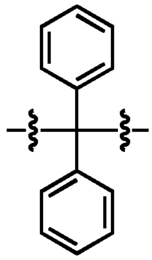 (1-5)

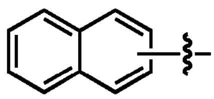 (1-3) 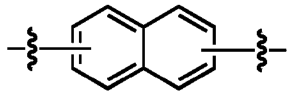 (1-6)

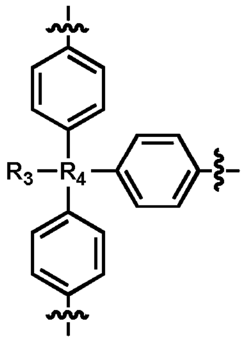 (1-7) 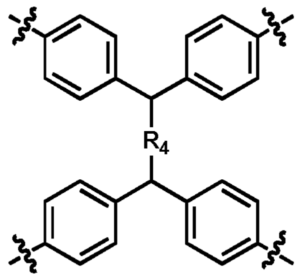 (1-8)

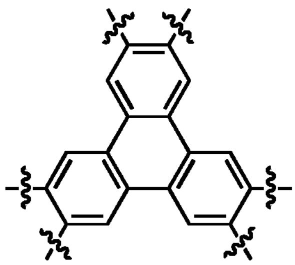 (1-9) 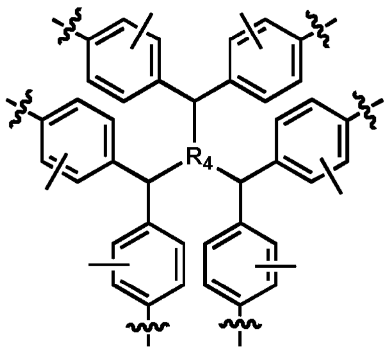 (1-10)

in General Formulae (1-1) to (1-10) above, $R_2$ is a single bond, an oxygen atom, or a methylene group; $R_3$ is a hydrogen atom or a methyl group; and $R_4$ indicates a direct bond, a single bond, or a phenyl group; and
(C) a radical polymerization initiator.

(2) The curable resin composition according (1) above, in which n in General Formula (1) above is 1 or 2.
(3) The curable resin composition according to (1) or (2) above, in which a mass ratio between the component (A) and the component (B) is 99:1 to 10:90.
(4) The curable resin composition according to any one of (1) to (3) above, in which $R_1$ in General Formula (1) above is a hydrogen atom, and Y is a single bond or a methylene group.
(5) The curable resin composition according to any one of (1) to (4) above, in which $R_2$ in General Formulae (1-1) and (1-4) above is a single bond or an oxygen atom.
(6) The curable resin composition according to any one of (1) to (5) above, in which $R_3$ in General Formula (1-2) above is a hydrogen atom.
(7) The curable resin composition according to any one of (1) to (6) above, in which the component (A) contains structural formulae represented by General Formulae (2) and (3) below:

[Chemical Formula 3]

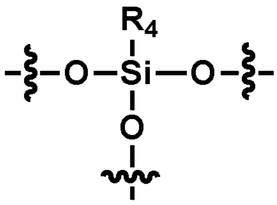 (2) 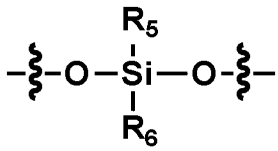 (3)

in General Formulae (2) and (3) above, $R_4$ is a $C_{1-12}$ organic group, and $R_5$ and $R_6$ each independently indicate a methyl group or a phenyl group.

(8) The curable resin composition according to (7) above, in which in the component (A), a molar ratio between General Formula (2) above and General Formula (3) above is 1:0.9 to 1:1.5.

## Advantageous Effects of Invention

The present invention can provide a curable resin composition that contains a polysiloxane resin having a specific reactive group, a (meth)acrylic acid derivative having a specific structure, and a radical polymerization initiator as essential components and thereby has low light absorption loss, high heat resistance, and excellent UV curability and also has excellent handleability.

## Description of Embodiments

The following describes an embodiment of the present invention in detail.

### [Curable Resin Composition]

The curable resin composition of the present embodiment contains (A) a polysiloxane resin, (B) a (meth)acrylic acid derivative, and (C) a radical polymerization initiator as essential components.

### <(A) Polysiloxane Resin>

The polysiloxane resin has one or more reactive groups selected from the group consisting of a (meth)acryloyl group and a styryl group. Among radical polymerizable groups, it is particularly preferable to have the above reactive groups from the viewpoint of UV curability. In the present specification, the "(meth)acryloyl" group means an acryloyl group or a methacryloyl group.

The polysiloxane resin is only required to have at least one reactive group and may have two or more reactive groups or three or more reactive groups. For example, being the (meth)acryloyl group provides particularly excellent UV curability, and being the styryl group provides particularly excellent low light absorption loss, which is preferred. The ratio may be selected as appropriate in accordance with required properties, and only either of the reactive groups or all of the reactive groups can be contained, which is not limited to a particular manner. From the viewpoint of UV curability, it is more preferable to have one or more reactive groups in a single molecular chain of the polysiloxane resin, and it is particularly preferable to have two or more reactive groups.

In the polysiloxane resin, a concentration of the reactive groups of 500 to 10,000 mmol/kg provides sufficient curability, which is preferred.

The polysiloxane resin of the present embodiment is not limited to a particular polysiloxane resin so long as it has a siloxane skeleton, and examples thereof include those obtained by complete or partial condensation of the following silane compounds. Examples of the silane compounds are as follows: organotrialkoxysilanes such as methyltrimethoxysilane, methyltriethoxysilane, methyltri-n-butoxysilane, ethyltrimethoxysilane, ethyltriethoxysilane, n-propyltrimethoxysilane, n-propyltriethoxysilane, iso-butyltrimethoxysilane, iso-butyltriethoxysilane, cyclohexyltrimethoxysilane, cyclohexyltriethoxysilane, hexyltrimethoxysilane, hexyltriethoxysilane, octyltrimethoxysilane, octyltriethoxysilane, decyltrimethoxysilane, decyltriethoxysilane, phenyltrimethoxysilane, phenyltriethoxysilane, vinyltrimethoxysilane, vinyltriethoxysilane, 3-glycidoxypropyltrimethoxysilane, 3-glycidoxypropyltriethoxysilane, p-styryltrimethoxysilane, p-styryltriethoxysilane, 3-(meth)acryloyloxypropyltrimethoxysilane, and 3-(meth)acryloyloxypropyltriethoxysilane; diorganodialkoxysilanes such as dimethyldimethoxysilane, dimethyldiethoxysilane, dimethyldi-n-butoxysilane, diethyldimethoxysilane, diethyldiethoxysilane, diphenyldimethoxysilane, diphenyldiethoxysilane, methylphenyldimethoxysilane, methylphenyldiethoxysilane, methylcyclohexyldimethoxysilane, 3-glycidoxypropylmethyldimethoxysilane, 3-glycidoxypropylmethyldiethoxysilane, 3-(meth)acryloyloxypropylmethyldimethoxysilane, and 3-(meth)acryloyloxypropylmethyldiethoxysilane; various chlorosilanes such as methyltrichlorosilane, ethyltrichlorosilane, phenyltrichlorosilane, vinyltrichlorosilane, 3-(meth)acryloyloxypropyltrichlorosilane, dimethyldichlorosilane, diethyldichlorosilane, and diphenyldichlorosilane, tetraethoxysilane, tetramethoxysilane, diphenylsilanediol, di-p-tolylsilane diol, bis(4-ethylphenyl)silanediol, bis(4-isopropylphenyl)silanediol, dinaphthylsilanediol, bis([1,1'-biphenyl]-4-yl)silanediol, trimethoxy(4-vinylphenyl)silane, triethoxy(4-vinylphenyl)silane, (4-isopropenylphenyl)trimethoxysilane, trimethoxy(4-vinyl-1-naphthyl)silane, and trimethoxy(4'-vinyl-[1,1'-biphenyl]-4-yl)silane. From the viewpoint of curability and flexibility, the polysiloxane resin is particularly preferably a polysiloxane resin containing a structural formula represented by General Formula (2) below and a structural formula represented by General Formula (3) below.

[Chemical Formula 4]

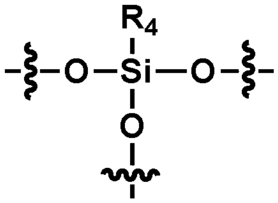

(2)

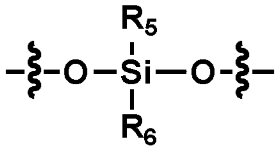

(3)

In General Formulae (2) and (3) above, $R_4$ is a $C_{1-12}$ organic group, and $R_5$ and $R_6$ each independently indicate a methyl group or a phenyl group. Note that the wavy line parts indicate binding sites.

Examples of the $C_{1-12}$ organic group in $R_4$ include chain alkyl groups such as a methyl group, an ethyl group, an n-propyl group, an isopropyl group, a butyl group, an isobutyl group, a sec-butyl group, and a t-butyl groups; alkoxy groups such as a methoxy group and an ethoxy group; cyclic alkyl groups such as a cyclohexyl group and a norbornanyl group; alkenyl groups such as a vinyl group, a 1-propenyl group, an allyl group, a butenyl group, and a 1,3-butadienyl group; alkynyl groups such an ethynyl group, a propynyl group, and a butynyl group; halogenated alkyl groups such as a trifluoromethyl group; alkyl groups having a saturated heterocyclic group such as a 3-pyrrolidinopropyl group; aryl groups such as a phenyl group optionally having alkyl substituents; and aralkyl groups such as a phenylmethyl group and a phenylethyl group. The organic group may have an oxygen atom, an amide bond, or the like between its carbon atoms and may further have a hydroxy group, a halogen atom, a vinyl group, an epoxy group, a glycidoxypropyl group, a styryl group, a (meth)acryloyloxypropyl group, or the like as a substituent.

In the polysiloxane resin, the molar ratio between the structural formulae represented by General Formulae (2) and (3) above is preferably in a range of 1:0.9 to 1:1.5 and particularly preferably in a range of 1:1 to 1:1.4. When the molar ratio of the structural formula represented by General Formula (3) is 0.9 or more, the number of hydroxy groups in the polysiloxane resin can be controlled, moisture absorption can be reduced, and the absorption in the near-infrared region can be reduced. When the molar ratio of the structural formula represented by General Formula (3) is 1.5 or less, the number of unreacted hydroxy groups in the polysiloxane resin is reduced, and further solidification of the polysiloxane resin is inhibited, thus improving handleability when the curable resin composition is prepared, which is preferred.

The polysiloxane resin has a weight average molecular weight of preferably 1,000 to 100,000 and more preferably 1,500 to 50,000. When the molecular weight is 1,000 or more, the molecular weight is high, and when made into the cured article, it is tough. When the molecular weight is 100,000 or less, when made into the cured resin composition, it has good compatibility with a (meth)acrylic acid derivative, which will be described below, and handleability is also excellent, which is preferred. The weight average molecular weight is a measured value in terms of polystyrene by gel permeation chromatography (GPC) using tetrahydrofuran (THF) as an eluent.

[Method for Producing (A) Polysiloxane Resin]

The method for producing the polysiloxane resin in the present embodiment is not limited to a particular method, and known and customary condensation reactions can be used. The following shows a method for producing the polysiloxane resin containing the structural formula represented by General Formula (2) above and the structural formula represented by General Formula (3) above, but this is not limiting.

The condensation reaction between a compound containing the structural formula represented by General Formula (2) above and a compound containing the structural formula represented by General Formula (3) above is performed in the presence of an acidic or basic catalyst.

Examples of the acidic catalyst include boric acid, trimethoxyboron, triethoxyboron, tri-n-propoxyboron, triisopropoxyboron, tri-n-butoxyboron, triisobutoxyboron, tri-sec-butoxyboron, tri-tert-butoxyboron, trimethoxyaluminum, triethoxyaluminum, tri-n-propoxyaluminum, triisopropoxyaluminum, tri-n-butoxyaluminum, triisobutoxyaluminum, tri-sec-butoxyaluminum, tri-tert-butoxyaluminum, tetramethoxytitanium, tetraethoxytitanium, tetra-n-propoxytitanium, tetra-isopropoxytitanium (titanium tetraisopropoxide), tetra-n-butoxytitanium, tetra-isobutoxytitanium, tetra-sec-butoxytitanium, tetra-tert-butoxytitanium, tetramethoxyzirconium, tetraethoxyzirconium, tetra-n-propoxyzirconium, tetra-isopropoxyzirconium, tetra-n-butoxyzirconium, tetra-isobutoxyzirconium, tetra-sec-butoxyzirconium, tetra-tert-butoxy zirconium, hydrochloric acid, sulfuric acid, phosphoric acid, acetic acid, maleic acid, methanesulfonic acid, p-toluenesulfonic acid, and trifluoromethanesulfonic acid.

Examples of the basic catalyst include sodium hydroxide, potassium hydroxide, lithium hydroxide, magnesium hydroxide, calcium hydroxide, strontium hydroxide, barium hydroxide, ammonium hydroxide, tetramethylammonium hydroxide, tetrabutylammonium hydroxide, triethylamine, N-ethyl diisopropylamine, dimethylaminoethanol, triethanolamine, and 2-amino-2-methyl-1-propanol.

Among these catalysts, particularly preferred is any of magnesium hydroxide, calcium hydroxide, strontium hydroxide, barium hydroxide, ammonium hydroxide, and triethylamine.

The amount of the catalyst used is preferably 0.001 to 10% by mass and particularly preferably 0.01 to 1% by mass with respect to the total mass of the compound containing the structural formula represented by General Formula (2) above and the compound containing the structural formula represented by General Formula (3) above. When the amount is within the above range, the condensation reaction sufficiently proceeds, which is preferred.

The condensation reaction may be carried out either in a solvent-free condition or in the presence of a solvent, but it is preferably carried out in the presence of a solvent in order to make the reaction system homogeneous. The reaction solvent is only required not to react with raw materials, and examples thereof include ketones such as acetone and methyl ethyl ketone (MEK); aromatic hydrocarbons such as benzene, toluene, and xylene; glycols such as ethylene glycol, propylene glycol, and hexylene glycol; glycol ethers such as ethyl cellosolve, butyl cellosolve, ethyl carbitol, butyl carbitol, diethyl cellosolve, and diethyl carbitol; and amides such as N-methyl-2-pyrrolidone (NMP) and N,N-dimethylformamide (DMF). One of these solvents may be used alone, or two or more may be used in combination. Among these, toluene is preferred.

Since the condensation reaction is a dealcoholization condensation reaction, it is preferably reacted in the absence of water and preferably performed under an inert gas atmosphere such as nitrogen gas.

The reaction temperature may be adjusted as appropriate so as to give desired molecular weight distribution and may be usually 30 to 100°C. The reaction time may also be adjusted as appropriate and is usually 1 to 40 hours.

After the end of the condensation reaction, the resulting polysiloxane resin is filtered through a membrane filter to remove the reaction solvent and byproduct alcohol under reduced pressure. It is also preferable to perform purification treatment as needed.

<(B) (Meth)acrylic Acid Derivative>

The (meth)acrylic acid derivative has a structure represented by General Formula (1) below:

[Chemical Formula 5]

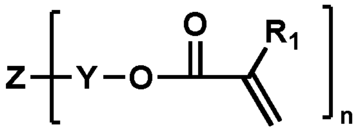

(1)

In General Formula (1) above, $R_1$ is a hydrogen atom or a methyl group, Y is a single bond, a methylene group, or an oxyethylene group, Z is any of General Formulae (1-1) to (1-6) below, and n indicates 1 to 6. When n is 2 to 6, a plurality of $R_1$ and Y may be the same or different.

[Chemical Formula 6]

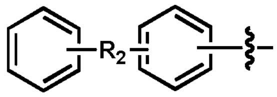 (1-1) 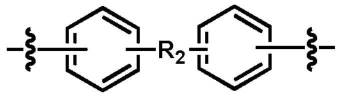 (1-4)

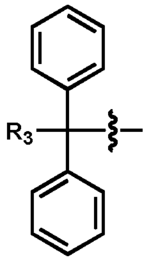 (1-2) 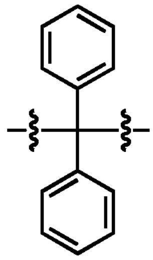 (1-5)

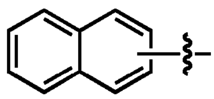 (1-3) 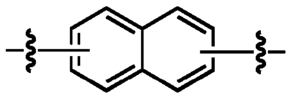 (1-6)

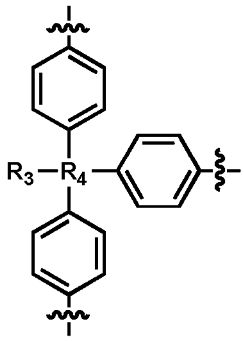 (1-7) 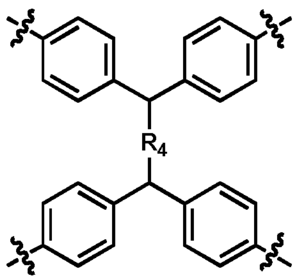 (1-8)

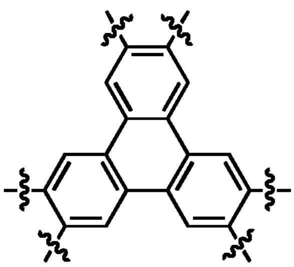 (1-9) 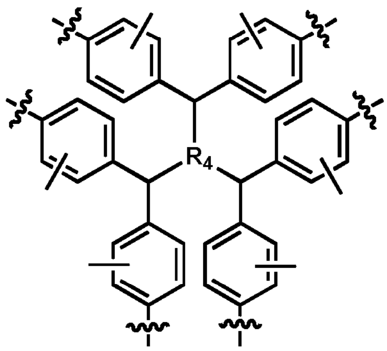 (1-10)

In General Formulae (1-1) to (1-10) above, $R_2$ is a single bond, an oxygen atom, or a methylene group, $R_3$ is a hydrogen atom or a methyl group, and $R_4$ indicates a direct bond, a single bond, or a phenyl group. Note that the wavy line parts in the formulae mean that they are binding sites with Y.

In General Formulae (1-7) to (1-10) above, the wavy line parts are binding sites with Y; not all the wavy line parts are required to bind to Y, and they may bind to at least one or more Y.

In the present invention, it is only required that one or more types of (meth)acrylic acid derivatives be contained. As described below, there are properties that are particularly excellent depending on the structure of Z, and thus a plurality of types of (meth)acrylic acid derivatives can be used in combination as appropriate to achieve desired properties.

In the present embodiment, by making the (meth)acrylic acid derivative an essential component, it serves to dilute the polysiloxane resin with high viscosity during the preparation of the curable resin composition, and thus handleability as the curable resin composition can be improved.

In the present embodiment, when the (meth)acrylic acid derivative contains the structure represented by General Formula (1) above, an aliphatic C-H bond concentration is reduced, the absorption in the near-infrared region can be inhibited, the viscosity of the (meth)acrylic acid derivative is reduced, and when made into the curable resin composition, solidification of the curable resin composition can be inhibited.

$R_1$ may be a hydrogen atom or a methyl group, and a hydrogen atom is particularly preferred from the viewpoint of reducing light absorption loss.

Y may be a single bond, a methylene group, or an oxyethylene group, and a single bond or a methylene group is particularly preferred from the viewpoint of reducing light absorption loss.

Any combination of $R_1$ and Y is not limited, and it is particularly preferred that $R_1$ be a hydrogen atom and Y be a single bond or a methylene group from the viewpoint of reducing light absorption loss.

The letter n indicates 1 to 6, more preferably 1 to 4, and particularly preferably 1 or 2. When n is within the above range, when made into the resin composition, it has low light absorption loss and high heat resistance and has excellent UV curability, which is preferred. In particular, when n is 1 or 2, the viscosity of the (meth)acrylic acid derivative is particularly low and handleability is excellent, which is preferred.

In General Formula (1) above, Z is not limited to particular one so long as it is any of General Formulae (1-1) to (1-10) above.

When Z is General Formula (1-1) or (1-4), the resulting curable resin composition has particularly excellent UV curability, which is preferred.

When Z is General Formula (1-2) or (1-5), compatibility with the polysiloxane resin is excellent, which is preferred.

When Z is General Formula (1-3) or (1-6), the resulting curable resin composition has particularly excellent heat resistance, which is preferred.

When Z is General Formula (1-7) or (1-8), the resulting curable resin composition has particularly excellent heat resistance, which is preferred.

In General Formula (1) above, when Z is General Formula (1-1) or (1-4) above, $R_2$ in the formula may be a single bond, an oxygen atom, or a methylene group and is particularly preferably a single bond or an oxygen atom from the viewpoint of reducing light absorption loss.

In General Formula (1) above, when Z is General Formula (1-2) or (1-7) above, $R_3$ in the formula may be a hydrogen atom or a methyl group and is particularly preferably a hydrogen atom from the viewpoint of reducing light absorption loss.

In General Formula (1) above, when Z is General Formula (1-8) above, $R_4$ in the formula may be a single bond or a phenyl group and is particularly preferably a single bond from the viewpoint of solvent solubility.

In General Formula (1), when Z is General Formulae (1-1) to (1-6) above, the resulting (meth)acrylic acid derivative is liquid, which can be made a solventless system that does not require dilution with a solvent when blended with the polysiloxane resin, which is particularly preferred.

In General Formula (1) above, when Z is General Formulae (1-7) to (1-10) above, the resulting (meth)acrylic acid derivative is solid and is preferably diluted with a solvent when blended with the polysiloxane resin. By being blended with the polysiloxane resin together with the (meth)acrylic acid derivative with Z being General Formulae (1-1) to (1-6) above in General Formula (1) above, use as a solventless system is also enabled.

When a plurality of (meth)acrylic acid derivatives are used in combination as described above, the blending ratio can be determined as appropriate so as to achieve desired viscosity.

To exhibit sufficient curability and handleability of the curable resin composition, the mass ratio between the polysiloxane resin and the (meth)acrylic acid derivative is preferably in a range of 99:1 to 10:90, more preferably in a range of 90:10 to 10:90, and particularly preferably in a range of 80:20 to 20:80.

[Method for Producing (B) (Meth)acrylic Acid Derivative]

The method for producing the (meth)acrylic acid derivative in the present embodiment is not limited to a particular method, and it can be produced by any known and customary method.

For example, a dehydration condensation reaction between (meth)acrylic acid and a corresponding hydroxy group-containing compound may be performed, or a ehydrohalogenaiton between (meth)acrylic acid halide and a corresponding hydroxy group-containing compound may be performed in the presence of a basic substance.

In the case of the dehydration condensation reaction, it can be obtained by being reacted at a temperature of preferably 70 to 150°C in the presence of an esterification catalyst such as p-toluenesulfonic acid or sulfuric acid and a polymerization inhibitor such as hydroquinone or phenothiazine preferably in the presence of a solvent (e.g. toluene, benzene, cyclohexane, n-hexane, n-heptane, or the like) by a known method. The ratio of (meth)acrylic acid used is 1 to 5 mol and preferably 1.05 to 2 mol with respect to 1 mol of the hydroxy group-containing compound. The esterification catalyst is made present at a concentration of 0.1 to 15 mol% and preferably 1 to 6 mol% with respect to the (meth)acrylic acid used.

In the ehydrohalogenaiton in the presence of the basic substance, it can be obtained by, for example, reacting (meth)acryloyl chloride and the corresponding hydroxy group-containing compound. In that process, it is preferable to add the basic substance such as triethylamine, pyridine, potassium hydroxide, sodium hydroxide, or the like. In that process, it is preferable to add a phase transfer catalyst such as benzyltributylammonium chloride, tetrabutylammonium bromide, or

benzyltriethylammonium chloride. It is obtained by reacting (meth)acryloyl chloride and the corresponding hydroxy group-containing compound in the presence of a solvent (e.g., toluene, benzene, cyclohexane, n-hexane, n-heptane, acetone, tetrahydrofuran, or the like) or water preferably at a temperature of -10 to 100°C.

The hydroxy group-containing compound is not limited to a particular compound, and examples thereof include hydroxy biphenyl; 2-phenylphenol, 3-phenylphenol, 4-phenylphenol, dihydroxybiphenyl; 2,2'-dihydroxybiphenyl, 4,4'-dihydroxybiphenyl, 2,4'-dihydroxybiphenyl, 2,5-dihydroxybiphenyl, phenylbenzyl alcohol; 3-phenylbenzyl alcohol, 4-phenylbenzyl alcohol, benzylphenol; 2-benzylphenol, 3-benzylphenol, 4-benzylphenol, bis(hydroxyphenyl)methane; 4,4'-dihydroxydiphenyldiphenylmethane, 2,2'-dihydroxydiphenyldiphenylmethane, 2,4'-dihydroxydiphenyldiphenylmethane, hydroxydiphenylmethyl; diphenylmethanol, diphenylethanol; 1,1-diphenylethanol, 2,2-diphenylethanol, 1,1-diphenyl-1,2-ethanediol, phenoxyphenol; 2-phenoxyphenol, 3-phenoxyphenol, 4-phenoxyphenol, dihydroxydiphenyl ether; 4,4'-dihydroxydiphenyl ether, 2,2'-dihydroxydiphenyl ether, 2,4'-dihydroxydiphenyl ether, phenoxybenzyl alcohol; 2-phenoxybenzyl alcohol, 3-phenoxybenzyl alcohol, 4-phenoxybenzyl alcohol, phenylphenoxyethanol; 2-phenylphenoxyethanol, 3-phenylphenoxyethanol, 4-phenylphenoxyethanol, naphthol; 1-naphthol, 2-naphthol, dihydroxynaphthalene; 1,2-dihydroxynaphthalene, 1,3-dihydroxynaphthalene, 1,4 dihydroxynaphthalene, 1,5-dihydroxynaphthalene, 1,6-dihydroxynaphthalene, 1,7-dihydroxynaphthalene, 2,3-dihydroxynaphthalene, 2,6-dihydroxynaphthalene, 2,7-dihydroxynaphthalene, naphthalene methanol; 1-naphthalene methanol, 2-naphthalene methanol, naphthalene dimethanol; 1,4-naphthalene dimethanol, 1,5-naphthalene dimethanol, 1,8-naphthalene dimethanol, 2,3-naphthalene dimethanol, tris-hydroxyphenylmethyl; tris(4-hydroxyphenyl)methane, tris(hydroxyphenyl)ethane, 1,3,5-tris(4-hydroxyphenyl)benzene, tetrakis(4-hydroxyphenyl)methane, tetrakis(hydroxyphenyl)ethane; 1,1,2,2-tetrakis(4-hydroxyphenyl)ethane, phenylenedimethylidyne tetrakisphenol; α,α,α',α'-tetrakis(4-hydroxyphenyl)-p-xylene, α,α,α',α'-tetrakis(4- hydroxyphenyl)-m-xylene, 2,3,6,7,10,11-hexahydroxytriphenylene, and isomers of these.

<(C) Radical Polymerization Initiator>

In the present embodiment, the radical polymerization initiator is not limited to a particular radical polymerization initiator so long as it starts radical polymerization by heating or irradiation with active rays such as ultraviolet rays and visible rays, and examples thereof include thermal radical polymerization initiators and photo-radical polymerization initiators.

Examples of the photo-radical polymerization initiator include 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, thioxanthone and thioxanthone derivatives, 2,2'-dimethoxy-1,2-diphenylethan-1-one, 2,4,6-trimethylbenzoyl diphenylphosphine oxide, bis(2,4,6-trimethylbenzoyl)phenylphosphine oxide, 2-methyl-1-[4-(methylthio)phenyl]-2-morpholino-1-propanone, and 2-benzyl-2-dimethylamino-1-(4-morpholinophenyl)-butan-1-one.

Examples of commercially available products of these radical polymerization initiators include "Irgacure-184," "Irgacure-149," "Irgacure-261," "Irgacure-369," "Irgacure-500," "Irgacure-651," "Irgacure-754," "Irgacure-784," "Irgacure-819," "Irgacure-907," "Irgacure-1116," "Irgacure-1664," "Irgacure-1700," "Irgacure-1800," "Irgacure-1850," "Irgacure-2959," "Irgacure-4043," and "Irgacure-1173" (manufactured by Ciba Specialty Chemicals), "Lucirin TPO" (manufactured by BASF), "Kayacure-DETX," "Kayacure-MBP," "Kayacure-DMBI," "Kayacure-EPA," and "Kayacure-OA" (manufactured by Nippon Kayaku Co., Ltd.), "Vicure-10" and "Vicure-55" (manufactured by Stouffer Chemical Company), "Trigonal-P1" (manufactured by Akzo), "Sandoray 1000" (manufactured by Sandoz), "Deep" (manufactured by Upjohn), and "Quantacure-PDO," "Quantacure-ITX," and "Quantacure-EPD" (manufactured by Ward Blenkinsop).

To exhibit sufficient curability, the radical polymerization initiator is preferably in a range of 0.05 to 20 parts by mass and more preferably in a range of 0.1 to 10 parts by mass with respect to 100 parts by mass of the curable resin composition.

<Other Components>

Furthermore, what is called an additive such as a photosensitizer, an antioxidant, a surfactant, a leveling agent, a light stabilizer, or a filler may be added to the curable resin composition of the present embodiment as needed in a ratio that does not adversely affect the effects of the present invention. When components other than the essential components are 10 parts by mass or less with respect to 100 parts by mass of the curable resin composition, the effects of the present invention are particularly excellent, which is preferred.

(Photosensitizer)

When the curable resin composition of the present embodiment is cured by photopolymerization, various photosensitizers may be added together with the radical polymerization initiator. Examples of the photosensitizer include amines, ureas, sulfur-containing compounds, phosphorus-containing compounds, chlorine-containing compounds,

nitriles, and other nitrogen-containing compounds. One of these may be used alone, or two or more may be used in combination. When these photosensitizers are added, the amount thereof added is preferably in a range of 0.01 to 10 parts by mass with respect to 100 parts by mass of the curable resin composition.

(Antioxidant)

An antioxidant may be added to the curable resin composition of the present embodiment for the purpose of improving heat resistance. Examples of the antioxidant include hindered phenolic compounds and hindered amine-based compounds. When these antioxidants are added, the amount thereof added is preferably in a range of 0.01 to 1 part by mass with respect to 100 parts by mass of the curable resin composition.

(Surfactant)

A surfactant may be added to the curable resin composition of the present embodiment for the purpose of improving applicability. Examples of the surfactant include fluorine-based surfactants, specifically perfluoroalkyl polyoxyethylene ethanol, fluorinated alkyl esters, perfluoroalkylamine oxides, and fluorine-containing organosiloxane-based compounds. When these surfactants are added, the amount thereof added is preferably in a range of 0.01 to 1 part by mass with respect to 100 parts by mass of the curable resin composition.

(Light Stabilizer)

For the light stabilizer, commercially available ones may be used, and examples thereof include TINUVIN (registered trademark) 123, 144, 152, 292, and 770 [manufactured by BASF Japan Ltd.] and ADK STAB (registered trademark) LA-52, LA-57, LA-63P, LA-68, LA-72, LA-77Y, LA-77G, LA-81, LA-82, and LA-87 [manufactured by Adeka Corporation].

<Preparation of Curable Resin Composition>

The method for preparing the curable resin composition of the present embodiment is not limited to a particular method so long as it is a method providing sufficient mixing, and stirring and mixing by a stirring blade are generally preferred. The stirring time and the stirring speed may be determined as appropriate by the amount of each of the above components blended, and from the viewpoint of ensuring sufficient mixing, the stirring time may be 1 to 24 hours and the stirring speed may be 10 to 1,000 rpm.

From the viewpoint of improving applicability and improving transparency, it is preferable to remove foreign matter from the curable resin composition by using a filter. It is also preferable to remove air bubbles in the curable resin composition by a defoaming apparatus such as a vacuum pump.

The curable resin composition preferably has viscosity excellent in handleability, which is preferably in a range of, for example, 500 to 100,000 mPa·s at 25°C. It may also be further diluted with an organic solvent to prepare desired viscosity as described below.

[Curable Resin Varnish]

The curable resin composition of the present embodiment may be diluted with an organic solvent and made into a curable resin varnish for the purpose of improving applicability. The organic solvent is not limited to a particular organic solvent so long as it can dissolve the curable resin composition, and examples thereof include aromatic hydrocarbons, ethers, alcohols, ketones, esters, and amides. Specific examples thereof include toluene, xylene, diethyl ether, dibutyl ether, tetrahydrofuran, 1,4-dioxane, methanol, ethanol, ethylene glycol, propylene glycol, acetone, methyl ethyl ketone, methyl acetate, ethyl acetate, $\gamma$-butyrolactone, ethylene carbonate, propylene carbonate, ethylene glycol monomethyl ether, ethylene glycol monoethyl ether, ethylene glycol monobutyl ether, ethylene glycol dimethyl ether, N,N-dimethylformamide, N,N-dimethylacetamide, and N methylpyrrolidone. One of these may be used, or two or more may be used in combination.

The curable resin composition of the present embodiment has low light absorption loss and high UV curability, further has excellent handleability, and can thus be suitably used in components used in opto-electric hybrid board, optical waveguides, right angle high path converters, optical pins, microlenses, spot size converters, optical shuffling sheets, optical converters, optical adhesives, and the like.

[Optical Waveguide]

For the method for forming an optical waveguide using the curable resin composition of the present embodiment, known and customary methods can be used. Usually, a curable resin layer is formed on a base material, then exposure and development treatment are performed, and thereby an optical waveguide can be formed.
The base material is not limited to a particular base material, and examples thereof include silicon wafers, glass wafers, quartz wafers, plastic circuit boards, and ceramic circuit boards.
As the method for forming the curable resin layer, it can be formed by applying it onto the base material by a method such as spin coating, dip coating, spraying, bar coating, roll coating, curtain coating, gravure coating, screen coating, or inkjet coating. The amount of application may be selected as appropriate in accordance with the purpose. When the curable resin varnish is used, drying treatment may be performed after forming the curable resin layer as needed.
When the curable resin layer is cured by exposure, the exposure amount is preferably 0.01 to 10 J/cm$^2$. Being within the above range makes curing progress sufficiently and can form fine patterns. In this process, it is preferable to perform exposure with light with a wavelength of 240 to 500 nm. Examples of the light with a wavelength of 240 to 500 nm include light of various wavelengths generated by a radiation generator, such as ultraviolet rays such as g-line and i-line and far ultraviolet rays (248 nm).
After the exposure treatment, development is performed using a developer. The developer is either an organic solvent-based developer or an alkaline developer, which may be used in combination.
Examples of the organic solvent-based developer include isopropyl alcohol, propylene glycol monomethyl ether, and propylene glycol monomethyl ether acetate.
For the alkaline developer, for example, an alkali metal hydroxide, an alkali metal carbonate, an alkali metal pyrophosphate, a sodium salt, an ammonium salt, an organic salt, or the like can be used as a base.

[Examples]

The following describes examples of the present invention more specifically, but the present invention is not limited to these examples.

[Method of Evaluation]

<Evaluation of Light Absorption Loss>

The curable resin composition was poured into a fluororubber O-ring placed on a glass plate, and a glass plate was placed from above such that no bubbles were taken in. The curable resin composition was irradiated with an integrated light of 3,000 mJ/cm$^2$ by a high-pressure mercury lamp under a nitrogen atmosphere to make a cured article. The cured article was peeled off from the glass plates and the O-ring to obtain a 20-mm diameter, 5-mm thick specimen.
The absorbance of the specimen in a wavelength region of 400 to 2,000 nm was measured using a UV-Vis-NIR spectrophotometer (V-670) manufactured by JASCO Corporation. Since the decrease in light transmission at 800 nm matches reflected light intensity, the baseline was corrected such that the absorbance at 800 nm was zero, and the absorbance without the effect of reflection was calculated. Light absorption loss at 850 nm, 1,310 nm, and 1,550 nm was calculated from the following expression.

$$\text{Light absorption loss (dB/cm)} = \text{absorbance} \times 2 \times 10$$

The light absorption loss calculated from the above expression is preferably 0.1 or less at 850 nm. At 1,310 nm, it is preferably 0.4 or less and particularly preferably 0.2 or less. At 1,550 nm, it is preferably 0.6 or less and particularly preferably 0.4 or less.

<Evaluation of Heat Resistance>

Using a TG-DTA apparatus (TG-8120) manufactured by Rigaku Corporation, measurement was performed at a temperature increase rate of 20°C/minute under a nitrogen flow of 20 mL/minute to measure a 5% weight loss temperature (Td5). Td5 is preferably 300°C or higher and particularly preferably 350°C or higher.

<Evaluation of Weight Average Molecular Weight>

Measurement was performed using the following measurement apparatus and measurement conditions to

measure the weight average molecular weight.

Measurement apparatus: "HLC-8320 GPC" manufactured by Tosoh Corporation
Column: Guard column "HXL-L" manufactured by Tosoh Corporation + "TSK-GEL G2000HXL" manufactured by Tosoh Corporation + "TSK-GEL G2000HXL" manufactured by Tosoh Corporation + "TSK-GEL G3000HXL" manufactured by Tosoh Corporation + "TSK-GEL G4000HXL" manufactured by Tosoh Corporation
Detector: RI (differential refractometer)
Data processing: "GPC Workstation EcoSEC-WorkStation" manufactured by Tosoh Corporation
Measurement conditions: Column temperature 40°C

Eluent: tetrahydrofuran
Flow rate: 1.0 mL/minute

Standard: The following monodispersed polystyrenes of known molecular weights were used in conformity with the measurement manual of the "GPC Workstation EcoSEC-WorkStation."

(Polystyrenes Used)

"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation

(Production Example 1)

Charged into a 1 L flask equipped with a thermometer, a condenser, and an agitator were 237.9 g (1.1 mol) of diphenylsilanediol, 124.2 g (0.5 mol) of 3-(methacryloyloxy)propyltrimethoxysilane, 99.1 g (0.5 mol) of phenyltrimethoxysilane, and 230.6 g toluene, and the mixture was heated to 50°C with stirring. Next, 0.37 g of barium hydroxide monohydrate was added thereto, and the mixture was reacted at 50°C for 20 hours. After the end of the reaction, the resulting reaction mixture was cooled to room temperature and filtered through a membrane filter with a pore size of 0.2 μm. Using a rotary evaporator, the toluene and methanol as a byproduct were removed under reduced pressure. A polysiloxane resin (A1) with a weight average molecular weight of 2,900 having a methacryloyl group was obtained.

(Production Example 2)

Synthesis was performed in the same manner as in Production Example 1 except that 124.2 g (0.5 mol) of 3-(methacryloyloxy)propyltrimethoxysilane in Production Example 1 was changed to 117.2 g (0.5 mol) of 3-(acryloxy)propyltrimethoxysilane to obtain a polysiloxane resin (A2) with a weight average molecular weight of 2,900 having an acryloyl group.

(Production Example 3)

Synthesis was performed in the same manner as in Production Example 1 except that 124.2 g (0.5 mol) of 3-(methacryloyloxy)propyltrimethoxysilane in Production Example 1 was changed to 112.2 g (0.5 mol) of trimethoxy(4-vinylphenyl)silane to obtain a polysiloxane resin (A3) with a weight average molecular weight of 3,000 having a styryl group.

(Production Example 4)

Synthesis was performed in the same manner as in Production Example 1 except that 237.9 g (1.1 mol) of diphenylsilanediol in Production Example 1 was changed to 194.7 g (0.9 mol) of diphenylsilanediol to obtain a polysiloxane resin (A4) with a weight average molecular weight of 2,800 having a methacryloyl group.

(Production Example 5)

A synthesis was performed in the same manner as in Production Example 1 except that 237.9 g (1.1 mol) of diphenylsilanediol in Production Example 1 was changed to 216.3 g (1.0 mol) of diphenylsilanediol to obtain a polysiloxane resin (A5) with a weight average molecular weight of 2,800 having a methacryloyl group.

(Production Example 6)

Synthesis was performed in the same manner as in Production Example 1 except that 237.9 g (1.1 mol) of diphenylsilanediol in Production Example 1 was changed to 302.8 g (1.4 mol) of diphenylsilanediol to obtain a polysiloxane resin (A6) with a weight average molecular weight of 3,500 having a methacryloyl group.

(Production Example 7)

Synthesis was performed in the same manner as in Production Example 1 except that 237.9 g (1.1 mol) of diphenylsilanediol in Production Example 1 was changed to 324.5 g (1.5 mol) of diphenylsilanediol to obtain a polysiloxane resin (A7) with a weight average molecular weight of 3,900 having a methacryloyl group.

(Production Example 8)

Charged into a 200 mL flask equipped with a thermometer, a condenser, and an agitator were 24.06 g (0.129 mol) of 4-phenoxyphenol, 96.23 g of dichloromethane, and 15.69 g (0.155 mol) of triethylamine, and the mixture was cooled to 0°C in an ice bath with stirring. Next, 14.03 g (0.155 mol) of acryloyl chloride was added dropwise thereto over 5 hours. Next, the mixture was increased to room temperature, 25°C, and was reacted at the temperature for another 5 hours. Next, the stirring was stopped, and the reaction mixture was washed with pure water 10 times. Subsequently, dichloromethane was distilled off from the reaction mixture under reduced pressure using an evaporator to obtain a liquid acrylic acid derivative (B1) represented by the following structural formula.

[Chemical Formula 7]

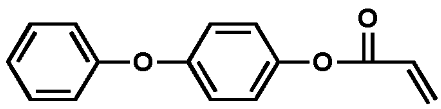

(Production Example 9)

Synthesis was performed in the same manner as in Production Example 8 except that 24.06 g of 4-phenoxyphenol in Production Example 8 was changed to 23.80 g (0.129 mol) of 4-benzylphenol to obtain a liquid acrylic acid derivative (B2) represented by the following structural formula.

[Chemical Formula 8]

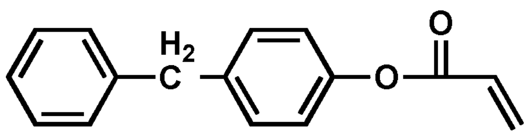

(Production Example 10)

Synthesis was performed in the same manner as in Production Example 8 except that 24.06 g of 4-phenoxyphenol in Production Example 8 was changed to 21.99 g (0.129 mol) of ortho-phenylphenol to obtain a liquid acrylic acid derivative (B3) represented by the following structural formula.

[Chemical Formula 9]

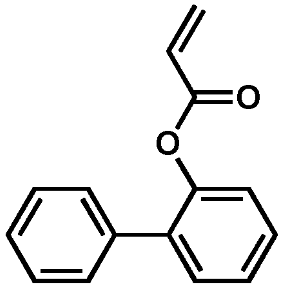

(Production Example 11)

Synthesis was performed in the same manner as in Production Example 8 except that 24.06 g of 4-phenoxyphenol in Production Example 8 was changed to 23.80 g (0.129 mol) of [1,1'-biphenyl]-3-methanol to obtain a liquid acrylic acid derivative (B4) represented by the following structural formula.

[Chemical Formula 10]

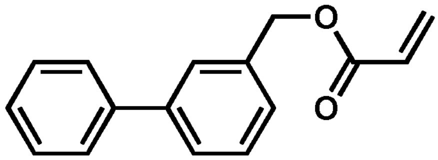

(Production Example 12)

Synthesis was performed in the same manner as in Production Example 8 except that 24.06 g of 4-phenoxyphenol in Production Example 8 was changed to 25.87 g (0.129 mol) of 3-phenoxybenzyl alcohol to obtain a liquid acrylic acid derivative (B5) represented by the following structural formula.

[Chemical Formula 11]

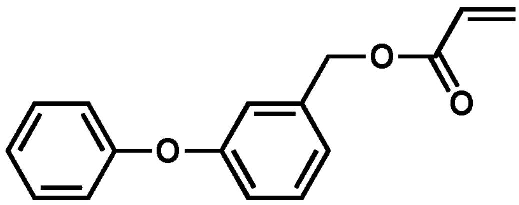

(Production Example 13)

Synthesis was performed in the same manner as in Production Example 8 except that 24.06 g of 4-phenoxyphenol in Production Example 8 was changed to 27.68 g (0.129 mol) of ortho-phenylphenoxyethanol to obtain a liquid acrylic acid derivative (B6) represented by the following structural formula.

[Chemical Formula 12]

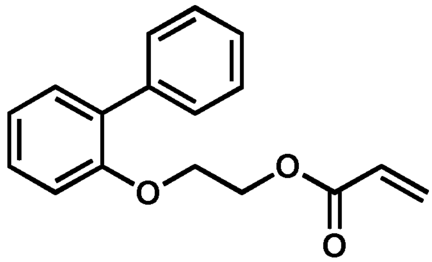

(Production Example 14)

Synthesis was performed in the same manner as in Production Example 8 except that 24.06 g of 4-phenoxyphenol in Production Example 8 was changed to 23.81 g (0.129 mol) of diphenylmethanol to obtain a liquid acrylic acid derivative (B7) represented by the following structural formula.

[Chemical Formula 13]

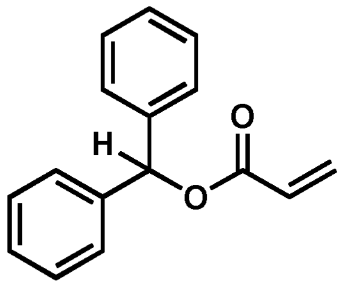

(Production Example 15)

Synthesis was performed in the same manner as in Production Example 8 except that 24.06 g of 4-phenoxyphenol in Production Example 8 was changed to 25.62 g (0.129 mol) of 1,1-diphenylethanol to obtain a liquid acrylic acid derivative (B8) represented by the following structural formula.

[Chemical Formula 14]

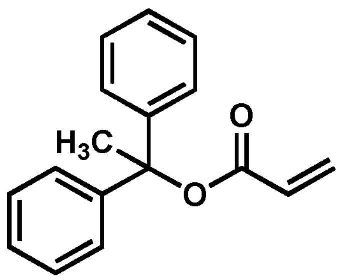

(Production Example 16)

Synthesis was performed in the same manner as in Production Example 8 except that 24.06 g of 4-phenoxyphenol in Production Example 8 was changed to 20.44 g (0.129 mol) of 1-naphthalenemethanol to obtain a liquid acrylic acid derivative (B9) represented by the following structural formula.

[Chemical Formula 15]

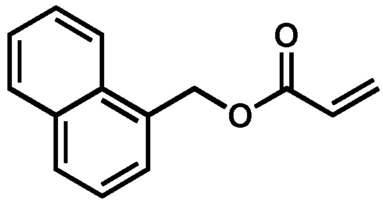

(Production Example 17)

Synthesis was performed in the same manner as in Production Example 8 except that 24.06 g of 4-phenoxyphenol in Production Example 8 was changed to 12.03 g (0.0646 mol) of 2,2'-biphenol to obtain a liquid acrylic acid derivative (B10) represented by the following structural formula.

[Chemical Formula 16]

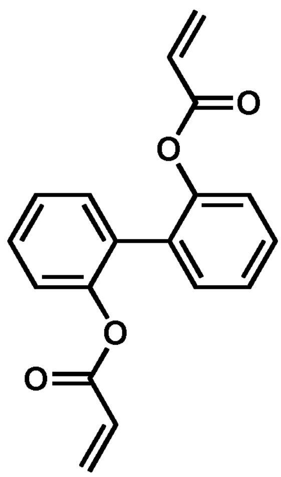

(Production Example 18)

Synthesis was performed in the same manner as in Production Example 8 except that 24.06 g of 4-phenoxyphenol in Production Example 8 was changed to 13.84 g (0.0646 mol) of 1,1-diphenyl-1,2-ethanediol to obtain a liquid acrylic acid derivative (B11) represented by the following structural formula.

[Chemical Formula 17]

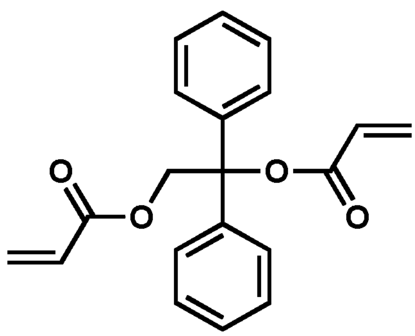

(Production Example 19)

Synthesis was performed in the same manner as in Production Example 8 except that 24.06 g of 4-phenoxyphenol in Production Example 8 was changed to 12.16 g (0.0646 mol) of 1,5-naphthalenedimethanol to obtain a liquid

acrylic acid derivative (B12) represented by the following structural formula.

[Chemical Formula 18]

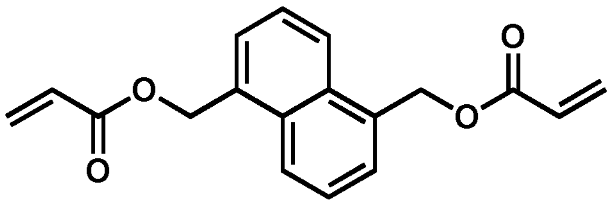

(Production Example 20)

Synthesis was performed in the same manner as in Production Example 8 except that 14.03 g of acryloyl chloride in Production Example 8 was changed to 16.20 g (0.155 mol) of methacryloyl chloride to obtain a liquid acrylic acid derivative (B13) represented by the following structural formula.

[Chemical Formula 19]

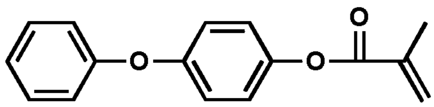

(Production Example 21)

Synthesis was performed in the same manner as in Production Example 8 except that 24.06 g of 4-phenoxyphenol in Production Example 8 was changed to 12.59 g (0.0431 mol) of tris(4-hydroxyphenyl)methane to obtain a solid acrylic acid derivative (B14) represented by the following structural formula.

[Chemical Formula 20]

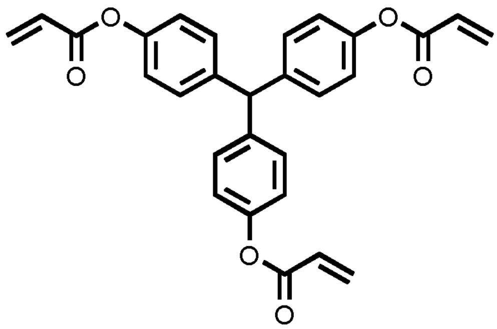

(Production Example 22)

Synthesis was performed in the same manner as in Production Example 8 except that 24.06 g of 4-phenoxyphenol in Production Example 8 was changed to 12.87 g (0.0323 mol) of 1,1,2,2-tetrakis(4-hydroxyphenyl)ethane to obtain a solid acrylic acid derivative (B15) represented by the following structural formula.

[Chemical Formula 21]

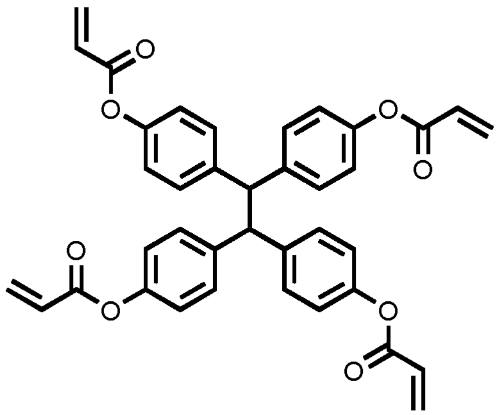

(Production Example 23)

Synthesis was performed in the same manner as in Production Example 8 except that 24.06 g of 4-phenoxyphenol in Production Example 8 was changed to 15.96 g (0.0431 mol) of 1,3,5-tris(4-hydroxyphenyl)benzene to obtain a solid acrylic acid derivative (B16) represented by the following structural formula.

[Chemical Formula 22]

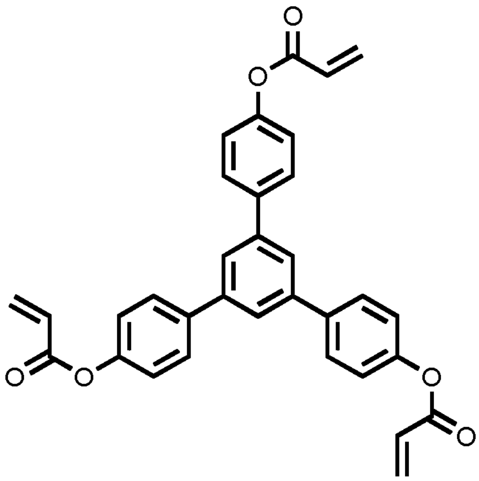

(Production Example 24)

Synthesis was performed in the same manner as in Production Example 8 except that 24.06 g of 4-phenoxyphenol in Production Example 8 was changed to 12.42 g (0.0323 mol) of tetrakis(4-hydroxyphenyl)methane to obtain a solid acrylic acid derivative (B17) represented by the following structural formula.

[Chemical Formula 23]

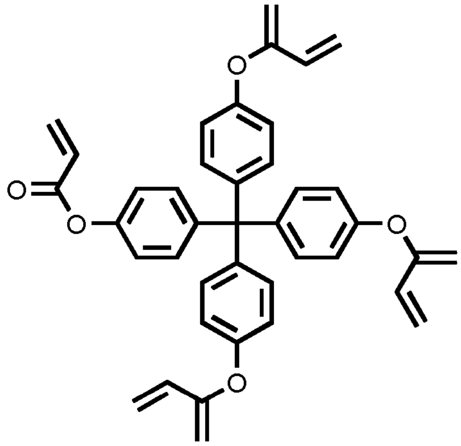

Using the polysiloxane resins (A1 to A7) and the acrylic acid derivatives (B1 to B15) obtained in the above production examples and 2-hydroxy-2-methyl-1-phenylpropanone as a radical polymerization initiator, curable resin compositions were prepared in accordance with the formulations in Tables 1 to 3 and evaluated. The resulting curable resin compositions were liquid and had excellent handleability. All the cured articles were able to be sufficiently cured by UV irradiation.

In the comparative examples, divinylbenzene and benzyl acrylate were used instead of the component (B) (the (meth)acrylic acid derivative) obtained in the above production examples.

[Table 1]

| | | Example | | | | | | | | | |
|---|---|---|---|---|---|---|---|---|---|---|---|
| | | 1 | 2 | 3 | 4 | 5 | 6 | 7 | 8 | 9 | 10 |
| Component (A) | A1 | 50 | | | 50 | 50 | 50 | 50 | 50 | 50 | 50 |
| | A2 | | 50 | | | | | | | | |
| | A3 | | | 50 | | | | | | | |
| Component (B) | B1 | 50 | 50 | 50 | | | | | | | |
| | B2 | | | | 50 | | | | | | |
| | B3 | | | | | 50 | | | | | |
| | B4 | | | | | | 50 | | | | |
| | B5 | | | | | | | 50 | | | |
| | B6 | | | | | | | | 50 | | |
| | B7 | | | | | | | | | 50 | |
| | B8 | | | | | | | | | | 50 |
| Component (C) | HMPP | 1 | 1 | 1 | 1 | 1 | 1 | 1 | 1 | 1 | 1 |
| Propagation loss (dB/cm) | 850 nm | 0.08 | 0.05 | 0.10 | 0.10 | 0.09 | 0.08 | 0.07 | 0.10 | 0.09 | 0.10 |
| | 1310 nm | 0.15 | 0.10 | 0.10 | 0.22 | 0.20 | 0.19 | 0.20 | 0.31 | 0.19 | 0.22 |
| | 1550 nm | 0.40 | 0.32 | 0.30 | 0.50 | 0.39 | 0.40 | 0.38 | 0.60 | 0.40 | 0.55 |
| 5% Weight loss temperature (°C) | | 355 | 360 | 350 | 360 | 355 | 350 | 365 | 350 | 350 | 355 |

[Table 2]

| | | Example | | | | | | | | | |
|---|---|---|---|---|---|---|---|---|---|---|---|
| | | 11 | 12 | 13 | 14 | 15 | 16 | 17 | 18 | 19 | 20 |
| Component (A) | A1 | 50 | 50 | 50 | 50 | 50 | 99.5 | 99 | 70 | 10 | 5 |
| Component (B) | B9 | 50 | | | | | | | | | |
| | B10 | | 50 | | | | | | | | |
| | B11 | | | 50 | | | | | | | |
| | B12 | | | | 50 | | | | | | |
| | B13 | | | | | 50 | 0.5 | 1 | 30 | 90 | 95 |
| | B14 | | | | | | | | | | |
| | B15 | | | | | | | | | | |
| Component (C) | HMPP | 1 | 1 | 1 | 1 | 1 | 1 | 1 | 1 | 1 | 1 |
| Propagation loss (dB/cm) | 850 nm | 0.05 | 0.10 | 0.10 | 0.09 | 0.08 | 0.10 | 0.10 | 0.05 | 0.10 | 0.05 |
| | 1310 nm | 0.20 | 0.20 | 0.20 | 0.20 | 0.19 | 0.20 | 0.20 | 0.16 | 0.20 | 0.38 |
| | 1550 nm | 0.39 | 0.40 | 0.38 | 0.39 | 0.40 | 0.40 | 0.39 | 0.35 | 0.38 | 0.60 |
| 5% Weight loss temperature (°C) | | 370 | 380 | 357 | 385 | 340 | 310 | 350 | 360 | 365 | 360 |

[Table 3]

| | | Example | | | | | | | Comparative Example | | |
|---|---|---|---|---|---|---|---|---|---|---|---|
| | | 21 | 22 | 23 | 24 | 25 | 26 | 27 | 1 | 2 | 3 |
| Component (A) | A1 | | | | | 50 | | | 100 | 50 | 50 |
| | A4 | 50 | | | | | 50 | | | | |
| | A5 | | 50 | | | | | 50 | | | |
| | A6 | | | 50 | | | | | | | |
| | A7 | | | | 50 | | | | | | |
| Component (B) | B1 | 50 | 50 | 50 | 50 | 20 | | | | | |
| | B3 | | | | | | 30 | 30 | | | |
| | B14 | | | | | 30 | 20 | | | | |
| | B15 | | | | | | | 20 | | | |
| Component (C) | HMPP | 1 | 1 | 1 | 1 | 1 | 1 | 1 | 1 | 1 | 1 |
| Other monomers | DVB | | | | | | | | | 50 | |
| | BZA | | | | | | | | | | 50 |

| | | | | | | | | | | | |
|---|---|---|---|---|---|---|---|---|---|---|---|
| Propagation loss (dB/cm) | 850 nm | 0.10 | 0.10 | 0.09 | 0.08 | 0.09 | 0.10 | 0.10 | 0.10 | 0.10 | 0.21 |
| | 1310 nm | 0.21 | 0.20 | 0.20 | 0.19 | 0.17 | 0.16 | 0.18 | 0.22 | 0.40 | 0.80 |
| | 1550 nm | 0.50 | 0.38 | 0.39 | 0.40 | 0.44 | 0.35 | 0.39 | 0.50 | 0.70 | 1.05 |
| 5% Weight loss temperature (°C) | | 350 | 350 | 350 | 340 | 380 | 410 | 380 | 290 | 230 | 340 |

In the tables, HMPP is the abbreviation of 2-hydroxy-2-methyl-1-phenylpropanone, DVB is the abbreviation of divinylbenzene, and BZA is the abbreviation of benzyl acrylate.

## Claims

1. A curable resin composition comprising components (A) to (C) below as essential components:

    (A) a polysiloxane resin having one or more reactive groups selected from the group consisting of a (meth)acryloyl group and a styryl group;
    (B) a (meth)acrylic acid derivative having a structure represented by General Formula (1) below:

    [Chemical Formula 1]

    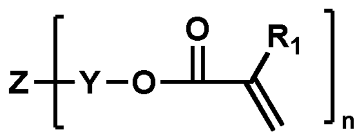

    (1)

    in General Formula (1) above, $R_1$ is a hydrogen atom or a methyl group; Y is any one of a single bond, a methylene group, and an oxyethylene group; Z is any one of General Formulae (1-1) to (1-10) below; n indicates 1 to 6; and when n is 2 to 6, a plurality of $R_1$ and Y may be the same or different:

    [Chemical Formula 2]

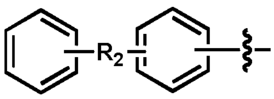 (1-1) 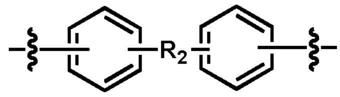 (1-4)

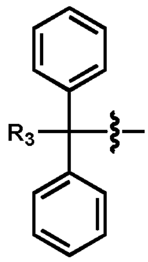 (1-2) 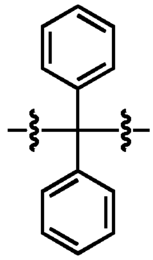 (1-5)

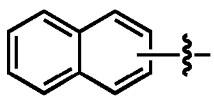 (1-3) 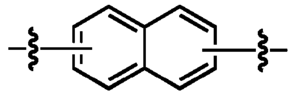 (1-6)

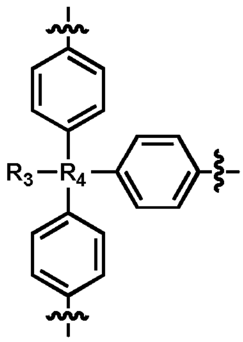 (1-7) 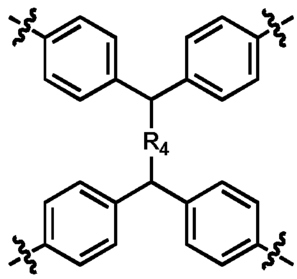 (1-8)

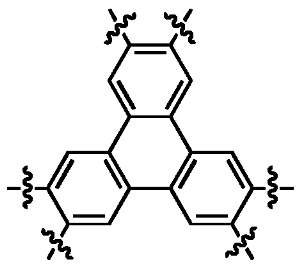 (1-9) 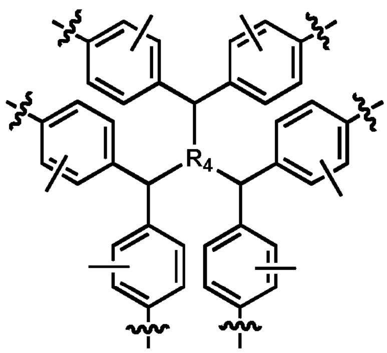 (1-10)

in General Formulae (1-1) to (1-10) above, $R_2$ is a single bond, an oxygen atom, or a methylene group; $R_3$ is a hydrogen atom or a methyl group; and $R_4$ indicates a direct bond, a single bond, or a phenyl group; and (C) a radical polymerization initiator.

2. The curable resin composition according to claim 1, wherein n in General Formula (1) above is 1 or 2.

3. The curable resin composition according to claim 1 or 2, wherein a mass ratio between the component (A) and the component (B) is 99:1 to 10:90.

4. The curable resin composition according to any one of claims 1 to 3, wherein $R_1$ in General Formula (1) above is a hydrogen atom, and Y is a single bond or a methylene group.

5. The curable resin composition according to any one of claims 1 to 4, wherein $R_2$ in General Formulae (1-1) and (1-4) above is a single bond or an oxygen atom.

**6.** The curable resin composition according to any one of claims 1 to 5, wherein $R_3$ in General Formulae (1-2) and (1-7) above is a hydrogen atom.

**7.** The curable resin composition according to any one of claims 1 to 6, wherein the component (A) contains structural formulae represented by General Formulae (2) and (3) below:

[Chemical Formula 3]

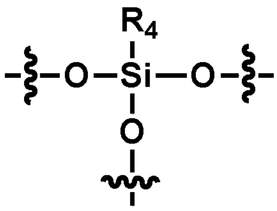
(2)

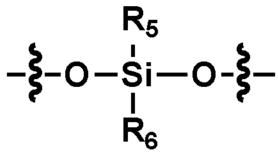
(3)

in General Formulae (2) and (3) above, $R_4$ is a $C_{1-12}$ organic group, and $R_5$ and $R_6$ each independently indicate a methyl group or a phenyl group.

**8.** The curable resin composition according to claim 7, wherein in the component (A), a molar ratio between General Formula (2) above and General Formula (3) above is 1:0.9 to 1:1.5.

## INTERNATIONAL SEARCH REPORT

International application No.
**PCT/JP2023/041194**

**A. CLASSIFICATION OF SUBJECT MATTER**

***C08F 290/06***(2006.01)i; ***C08F 290/14***(2006.01)i
FI: C08F290/06; C08F290/14

According to International Patent Classification (IPC) or to both national classification and IPC

**B. FIELDS SEARCHED**

Minimum documentation searched (classification system followed by classification symbols)

C08F290/06; C08F290/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2013-064126 A (SANYO CHEM. IND., LTD.) 11 April 2013 (2013-04-11)<br>claims, examples | 1, 2, 4-8<br>3 |
| A | JP 2014-210871 A (DIC CORP.) 13 November 2014 (2014-11-13)<br>entire text | 1-8 |
| A | JP 2016-102208 A (SANYO CHEM. IND., LTD.) 02 June 2016 (2016-06-02)<br>entire text | 1-8 |
| A | JP 2018-184535 A (DIC CORP.) 22 November 2018 (2018-11-22)<br>entire text | 1-8 |
| P, X | WO 2023/190071 A1 (MITSUI CHEMICALS, INC.) 05 October 2023 (2023-10-05)<br>claims, examples | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 January 2024** | **23 January 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2023/041194**

| Patent document cited in search report | Publication date (day/month/year) | Patent family member(s) | Publication date (day/month/year) |
| --- | --- | --- | --- |
| JP 2013-064126 A | 11 April 2013 | (Family: none) | |
| JP 2014-210871 A | 13 November 2014 | (Family: none) | |
| JP 2016-102208 A | 02 June 2016 | (Family: none) | |
| JP 2018-184535 A | 22 November 2018 | (Family: none) | |
| WO 2023/190071 A1 | 05 October 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0501148 A
- US 6984483 B
- JP 2020184091 A
- JP H1161081 A